# EUROPÄISCHE PATENTANMELDUNG

(11) **EP 2 551 070 A1**
(43) Veröffentlichungstag der Anmeldung: **30.01.2013**
(21) Anmeldenummer: 12175887.4
(22) Anmeldetag: 11.07.2012
(51) Int. Cl.: B25J 15/02

(54) **Greifvorrichtung**

(30) Priorität: 26.07.2011 DE 102011079839
(71) Anmelder: Schunk Sintermetalltechnik GmbH, 35452 Heuchelheim (DE)
(72) Erfinder: Lotz, Norbert, 35321 Laubach (DE); Neuser, Ulrich, 35398 Giessen (DE)
(74) Vertreter: advotec.

(57) **Zusammenfassung**

Die Erfindung betrifft eine Greifvorrichtung (13) mit zwei um eine Schwenkachse gegeneinander verschwenkbaren Backenstücken, die vermittels eines Stellgetriebes (26) von einem Antriebsmotor (27) angetrieben werden, wobei die Backenstücke auf einer gemeinsamen Schwenkachse gelagert sind und zur Ausbildung des Stellgetriebes eine Antriebswelle (25) des Stellgetriebes radial zwischen einander zugewandten axialen Antriebsflächen der Backenstücke eingreift, derart, dass sich ein auf der Antriebswelle ausgebildetes Antriebsrad in kraftschlüssigem Eingriff mit den axialen Antriebsflächen befindet.

## Beschreibung

Die vorliegende Erfindung betrifft eine Greifvorrichtung mit zwei um eine Schwenkachse gegeneinander verschwenkbaren Backenstücken, die vermittels eines Stellgetriebes von einem Antriebsmotor angetrieben werden.

Aus der DE 10 2008 057 308 A1 ist eine pneumatisch angetriebene Greifvorrichtung bekannt, die als sogenannter Winkelgreifer ausgeführt ist, bei der die beiden Backenstücke der Greifvorrichtung auf jeweils einer Schwenkwelle angeordnet sind, derart, dass die beiden Schwenkachsen voneinander beabstandet sind. Die Schwenkbewegung der bekannten Greifvorrichtung wird durch Einwirkung einer Kolbenstange eines pneumatisch beaufschlagten Kolbens bewirkt. Der Kolben befindet sich in einem massiv ausgebildeten Gehäuse, das gleichzeitig auch zur Aufnahme bzw. Lagerung der Schwenkwellen auf den Schwenkachsen dient. Aufgrund der vorstehend erläuterten Konstruktion der bekannten Greifvorrichtung ist diese groß und massiv ausgebildet und ermöglicht nur eine unzureichende Dosierung der Greifkraft.

Der vorliegenden Erfindung liegt die Aufgabe zugrunde, eine Greifvorrichtung vorzuschlagen, die die Einstellung einer möglichst genau dosierten Greifkraft der Backenstücke bei gleichzeitig möglichst kleiner Dimensionierung und geringer Masse der Greifvorrichtung ermöglicht.

Diese Aufgabe wird durch eine Greifvorrichtung mit den Merkmalen des Anspruchs 1 gelöst.

Bei der erfindungsgemäßen Greifvorrichtung sind die Backenstücke auf einer gemeinsamen Schwenkachse gelagert und zur Ausbildung des Stellgetriebes greift eine Antriebswelle des Getriebes radial zwischen einander zugewandten axialen Antriebsflächen der Backenstücke ein, derart, dass sich ein auf der Antriebswelle ausgebildetes Antriebsrad in kraftschlüssigem Eingriff mit den axialen Antriebsflächen befindet.

Der erfindungsgemäße Aufbau der Greifvorrichtung ermöglicht somit einen sehr kompakten Gesamtaufbau der Greifvorrichtung mit lediglich einer Schwenkachse und einem Stellgetriebe, dass im Wesentlichen zwischen den Backenstücken angeordnet ist. Darüber hinaus sind die Backenstücke selbst Bestandteil des Stellgetriebes, so dass den Backenstücken neben ihrer angestammten Funktion zum Anschluss von Greiffingern oder dergleichen noch die Funktion von Getriebegliedern zukommt. Hieraus ergibt sich eine entsprechend geringe Teileanzahl bei der erfindungsgemäßen Greifvorrichtung.

Bei einer besonders bevorzugten Ausführungsform der Greifvorrichtung ist das Antriebsrad als Kegelrad ausgebildet, und die Antriebsflächen sind von an den Backenstücken ausgebildeten Kegelradsegmenten gebildet. Dabei kann der Eingriff der Kegelradpaarung durch eine Verzahnung der Kegelräder oder etwa auch durch kegelförmige Reibräder ausgebildet sein.

Wenn der Antriebsmotor der Greifvorrichtung als elektrischer Servomotor ausgebildet ist, kann die bereits schon aufgrund des erfindungsgemäßen direkten Zusammenwirkens des Antriebsrads der Antriebswelle mit den Backenstücken genau dosierbare Kraft- bzw. Wegübertragung von der Antriebswelle auf die Backenstücke durch den in seiner Stellbewegung exakt dosierbaren Servomotor noch weiter unterstützt werden.

Eine weitere vorteilhafte Weiterbildung der durch den erfindungsgemäßen Aufbau der Greifvorrichtung ermöglichten Leichtbauweise kann erreicht werden, wenn die Schwenkachse der Backenstücke durch eine Achshülse gebildet ist, auf der die Backenstücke mit einer als Ring ausgebildeten Backenbasis in einer Radiallagerung gelagert sind. Auf der somit besonders leichtgewichtig ausgeführten Schwenkachse kann die Radiallagerung vorzugsweise als Kugellagerung ausgeführt sein.

Wenn die Backenstücke zum Anschluss von Fingerstücken, die zur Herstellung eines Greifkontakts zu einem zu ergreifenden Gegenstand dienen, an der Backenbasis ausgebildete Fingerfortsätze aufweisen, die gekröpft ausgebildet sind, derart, dass Anschlussenden der Fingerfortsätze in einer gemeinsamen Ebene mit einer Drehachs des Antriebsmotors angeordnet sind, lassen sich die Backenstücke besonders verwindungssteif ausführen. Dabei können die Backenstücke so ausgeführt sein, dass die Fingerstücke einstückig an die Anschlussenden anschließend ausgebildet sind, oder die Backenstücke können Anschlussenden aufweisen, die eine Montage von unabhängig von den Backenstücken ausgebildeten Fingerstücke ermöglichen.

Bei einer weiteren besonders bevorzugten Ausführungsform der Greifvorrichtung sind zur Ausbildung eines Vorrichtungsgestells die Achshülse und ein Gestellteil zur Lagerung der Antriebswelle oder Aufnahme des Antriebsmotors über Gestellplatten miteinander verbunden, derart, dass die Backenstücke und das Stellgetriebe sandwichartig zwischen den Gestellplatten aufgenommen sind. Somit ermöglichen die Gestellplatten neben dem mechanischen Verbund mit der Achshülse die Ausbildung von Gehäusewandungen, wobei aufgrund ihrer plattenförmigen Ausgestaltung die Gestellplatten eine weitere Gewichtsreduzierung der Greifvorrichtung ermöglichen. Diese wird insbesondere dann in einem besonderen Ausmaß möglich, wenn die Gestellplatten des Vorrichtungsgestells aus kohlefaserverstärktem Material bestehen, das eine hohe mechanische Belastbarkeit zur Erfüllung der Gestellfunktion mit einer leichtgewichtigen Ausführung kombiniert.

Wenn das Vorrichtungsgestell einen lösbar mit dem Vorrichtungsgestell verbundenen Deckelteil mit Durchführungen für die Fingerfortsätze der Backenstücke aufweist, wobei das Deckelteil zusammen mit dem Gestellteil und den Gestellplatten ein Gehäuse für die Greifvorrichtung ausbildet, ist die Ausführung einer Greifvorrichtung mit einem nach außen hin im wesentlichen abgeschlossenen Gehäuse möglich, das die Funktionsteile, insbesondere das Stellgetriebe, vor Verschmutzung abschirmt, ohne dass hiermit eine wesentliche Erhöhung der Masse der Greifvorrichtung verbunden wäre.

Nachfolgend wird eine bevorzugte Ausführungsform der Erfindung anhand der Zeichnung näher erläutert.

Es zeigen:
- **Fig. 1**: eine Greifvorrichtung als Bestandteil eines Handhabungssystems;
- **Fig. 2**: die in **Fig. 1** dargestellte Greifvorrichtung in vergrößerter Darstellung;
- **Fig. 3**: die in **Fig. 2** dargestellte Greifvorrichtung in einer Explosionsdarstellung;
- **Fig. 4**: eine Greifvorrichtung in unmittelbarer Verbindung mit einem Antriebsmotor;
- **Fig. 5**: die in **Fig. 4** dargestellte Greifvorrichtung in Seitenansicht;
- **Fig. 6**: die in **Fig. 4** dargestellte Greifvorrichtung in Draufsicht.

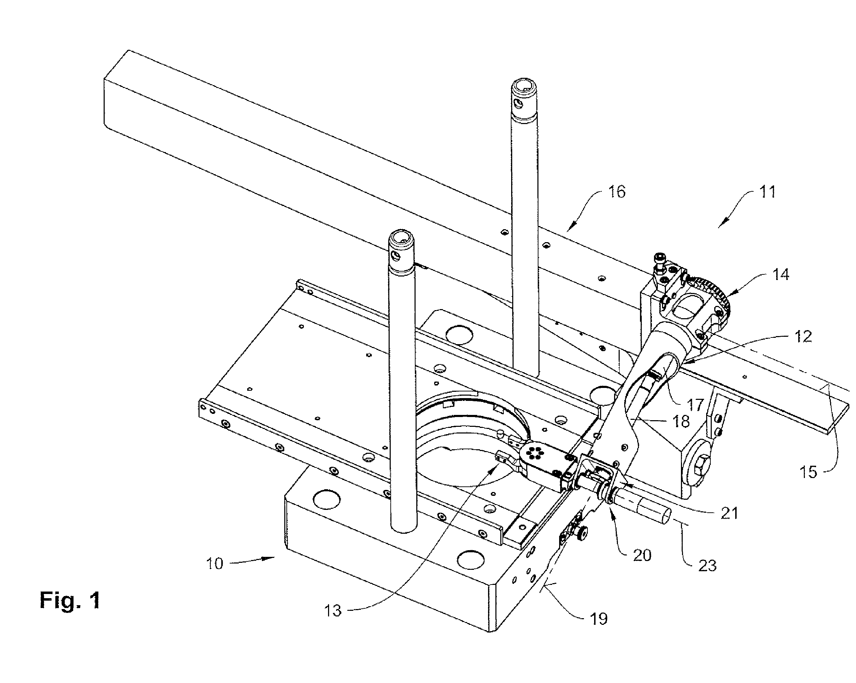

**Fig. 1** zeigt ein unmittelbar benachbart zu einer Formvorrichtung 10 angeordnetes Handhabungssystem 11, das an einem freien Ende eines Auslegerarms 12 eine Greifvorrichtung 13 aufweist, die zur Entnahme eines hier nicht näher dargestellten Formstücks aus einem ebenfalls hier nicht näher dargestellten Formwerkzeug dient.

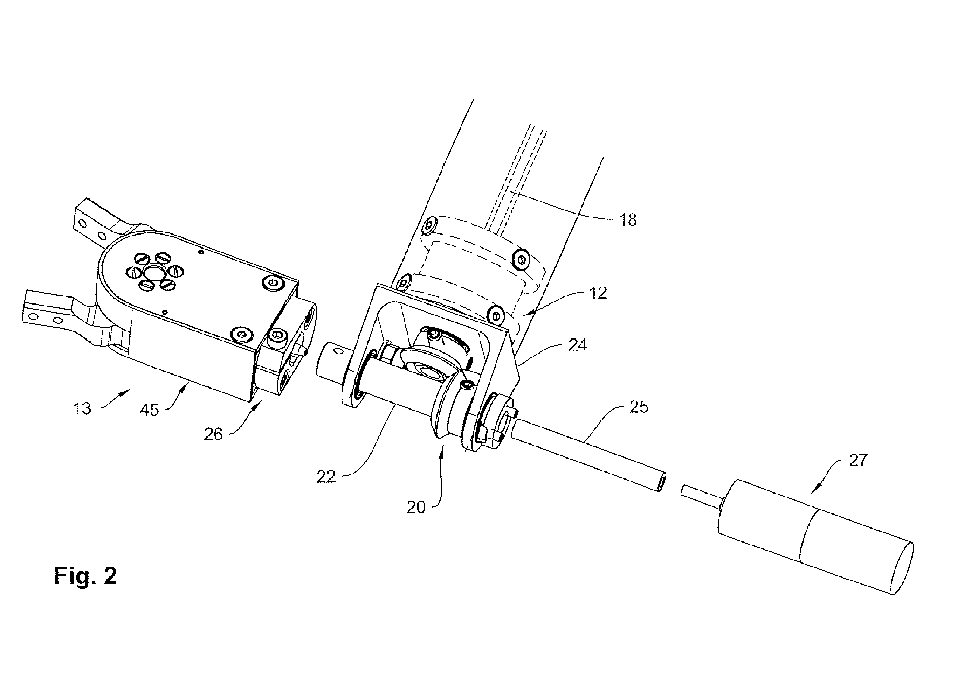

Der Auslegerarm 12 des Handhabungssystems 11 ist mit einem Anschlussende 14 an einer längs einer horizontalen Zustellachse 15 verfahrbaren Zustelleinrichtung 16 angeordnet, die vorzugsweise mit einem elektrischen Antrieb versehen ist. Der Auslegerarm 12 ermöglicht vermittels eines elektrischen Antriebsmotors 17 eine rotatorische Verstellung einer Auslegerwelle 18 um eine Drehachse 19. An seinem der Greifvorrichtung 13 zugewandten Anschlussende 20 ist der Auslegerarm 12 mit einem Winkelgetriebe 21 versehen, das, wie insbesondere in **Fig. 2** dargestellt ist, die Drehbewegung der Auslegerwelle 18 auf eine Trägerwelle 22 überträgt, die im vorliegenden Fall als Hohlwelle ausgeführt ist und eine Schwenkverstellung der Greifvorrichtung 13 um eine zur Zustellachse 15 parallele Drehachse 23 ermöglicht.

Die Trägerwelle 22 ist in einem am Anschlussende 20 des Auslegerarms 12 angeordneten Lagerbock 24 gelagert und nimmt koaxial eine Antriebswelle 25 der Greifvorrichtung 13 auf, die ein Stellgetriebe 26 der Greifvorrichtung 13 mit einem Antriebsmotor 27 der Greifvorrichtung 13 verbindet, der auf der der Greifvorrichtung 13 gegenüberliegenden Seite des Lagerbocks 24 angeordnet ist.

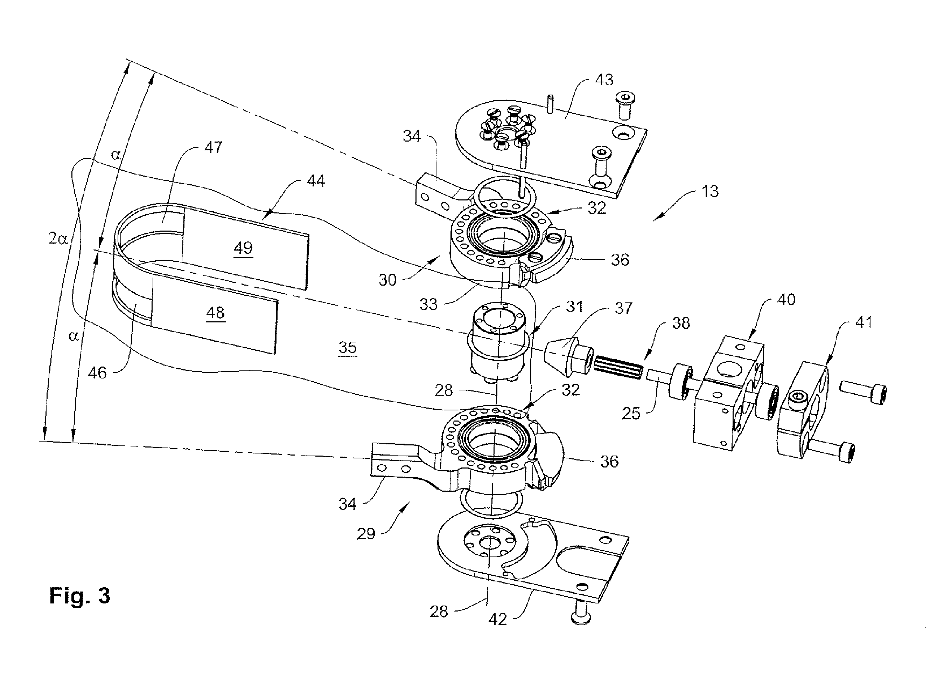

Wie insbesondere aus einer Zusammenschau der **Fig. 2** und **3** deutlich wird, weist die Greifvorrichtung 13 zwei um eine Schwenkachse 28 gegeneinander verschwenkbare Backenstücke 29, 30 auf, die zur Ausbildung der Schwenkachse 28 auf einer Achshülse 31 mittels Kugellagern 32 gelagert ist. Die Backenstücke 29, 30 weisen eine ringförmig ausgebildete Backenbasis 33 auf, die zur radial inneren Aufnahme der Kugellager 32 dient.

An der Backenbasis 33 weist jedes Backenstück 29, 30 einen Fingerfortsatz 34 auf, wobei, wie insbesondere **Fig. 3** zeigt, die Backenstücke 39, 30 im vorliegenden Fall identisch ausgebildet sind und sich in einer um 180° gegeneinander verdrehten Relativpositionierung auf der Achshülse 31 befinden, derart, dass die Fingerfortsätze 34 jeweils um einen Schwenkwinkel α gegenüber einer mit der Schwenkachse 28 zusammenfallenden Mittelebene 35 der Greifvorrichtung 13 verschwenkt angeordnet sind. Somit definieren die jeweils um den Schwenkwinkel α gegenüber der Mittelebene 35 verschwenkten Fingerfortsätze 34 einen Öffnungswinkel 2 α der Greifvorrichtung 13.

Wie insbesondere aus **Fig. 3** ersichtlich, weisen die Backenstücke 29, 30 an ihrer Backenbasis 33 jeweils ein Kegelradsegment 36 auf, das im vorliegenden Fall unabhängig von der Backenbasis 33 ausgebildet und über eine Schraubverbindung mit diesem verbunden ist. Zwischen den Kegelradsegmenten 36 der Backenstücke 39, 30 ist ein Kegelrad 37 angeordnet, das sich auf einem Anschlussende 38 der Antriebswelle 25 befindet und eine Eingriffsverbindung **(****Fig. 2****)** mit den Kegelradsegmenten 36 zur Ausbildung des Stellgetriebes 26 herstellt.

Wie ferner insbesondere **Fig. 3** zeigt, ist die Antriebswelle 25 der in **Fig.** 2 dargestellten Greifvorrichtung 13 in einem Gestellteil 40 gelagert. Zur Verbindung des Gestellteils 40 mit der Trägerwelle 22 ist ein Flanschstück 41 vorgesehen, das mit dem Gestellteil 40 im vorliegenden Fall verschraubt ist.

Die Verbindung der Achshülse 31, die zur verschwenkbaren Aufnahme der Backenstücke 29, 30 dient, mit dem Gestellteil 40, das die Antriebswelle 25 zum Antrieb des Stellgetriebes 26 aufnimmt, erfolgt über Gestellplatten 42, 43, die jeweils ein axiales Ende der Achshülse 31 mit dem Gestellteil 40 verbinden.

Die Gestellplatten 42, 43 und das Gestellteil 40 werden durch ein Deckelteil 44 zu einem Gehäuse 45 derart ergänzt, dass lediglich die Fingerfortsätze 34 durch Durchführungen 46, 47 des Deckelteils 44 nach außen ragen und ansonsten die Greifvorrichtung 13 nach außen hin abgeschlossen ist. Dabei ist das Deckelteil 44 so ausgeführt, dass es frontseitig auf die Greifvorrichtung 13 aufgeschoben werden kann und zum Anschluss des Deckelteils 44 Schenkelwandungen 48, 49 des insgesamt U-förmig ausgebildeten Deckelteils 44 an ihren freien Enden mit dem Gestellteil 40 verbunden werden können.

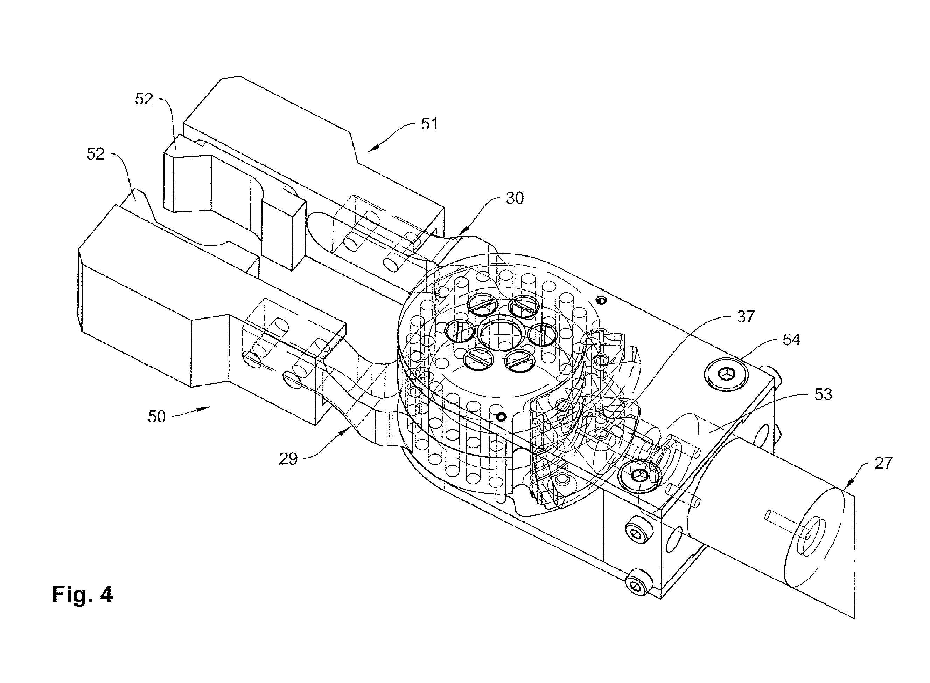

Wie **Fig. 4** zeigt dienen die Fingerfortsätze 34 der Backenstücke 39, 30 zum Anschluss von Fingerstücken 50, 51 die an ihren Enden mit Kontaktinlays 52 bestückt sind, welche ein sicheres Ergreifen von Formstücken ermöglichen.

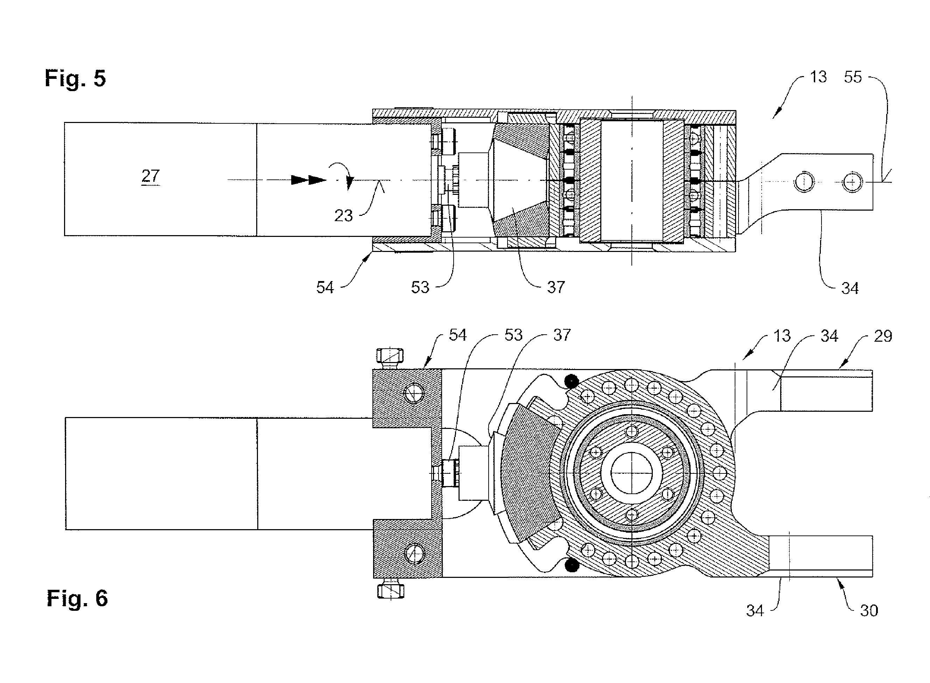

Wie **Fig. 4** zeigt, ist es auch möglich, abweichend von den Darstellungen in den **Fig. 1** bis **3****,** eine Motorwelle 53 **(****Fig. 5 und 6****)** des Antriebsmotors 27 unmittelbar mit dem Kegelrad 37 zu verbinden und alternativ zu dem in den **Fig. 1** bis **3** dargestellten Gestellteil 40 ein Gestellteil 54 vorzusehen, das einen unmittelbaren Anschluss des Antriebsmotors 27 an die Greifvorrichtung 13 ermöglicht.

Aus einer Zusammenschau der **Fig. 5** und **6** wird die Funktionsweise der Greifvorrichtung 13 deutlich, derart, dass eine Rotation in die in **Fig. 5** eingezeichnete Drehrichtung einen Schließvorgang, also ein Aufeinanderzubewegen der Fingerfortsätze 34 der Backenstücke 29, 30 bewirkt und eine Drehung in entgegengesetzter Richtung einen Öffnungsvorgang, also ein Auseinanderbewegen der Fingerfortsätze 34 bewirkt. Weiterhin zeigt insbesondere die **Fig. 5****,** dass aufgrund der gekröpften Ausführung der Fingerfortsätze 34 sich diese mit ihrer Mittelachse 55 in einer Ebene mit der Drehachse 23 des Antriebsmotors 27 befinden und somit eine besonders verwindungssteife Ausgestaltung der Fingerfortsätze 34 ermöglicht ist.

## Patentansprüche

1. Greifvorrichtung (13) mit zwei um eine Schwenkachse (28) gegeneinander verschwenkbaren Backenstücken (29,30), die vermittels eines Stellgetriebes (26) von einem Antriebsmotor (27) angetrieben werden,
**dadurch gekennzeichnet,**
**dass** die Backenstücke auf einer gemeinsamen Schwenkachse gelagert sind und zur Ausbildung des Stellgetriebes eine Antriebswelle (25) des Stellgetriebes radial zwischen einander zugewandten axialen Antriebsflächen der Backenstücke eingreift, derart, dass sich ein auf der Antriebswelle ausgebildetes Antriebsrad in kraftschlüssigem Eingriff mit den axialen Antriebsflächen befindet.

2. Greifvorrichtung nach Anspruch 1,
**dadurch gekennzeichnet,**
**dass** das Antriebsrad als Kegelrad (37) und die Antriebsflächen von an den Backenstücken (29, 39) ausgebildeten Kegelradsegmenten (36) gebildet sind.

3. Greifvorrichtung nach Anspruch 1 oder 2,
**dadurch gekennzeichnet,**
**dass** der Antriebsmotor (27) als elektrischer Servomotor ausgebildet ist.

4. Greifvorrichtung nach einem der vorangehenden Ansprüche,
**dadurch gekennzeichnet,**
**dass** die Schwenkachse (28) durch eine Achshülse (31) definiert ist, auf der die Backenstücke (29, 30) mit einer als Ring ausgebildeten Backenbasis (33) in einer Radiallagerung gelagert sind.

5. Greifvorrichtung nach Anspruch 4,
**dadurch gekennzeichnet,**
**dass** die Backenstücke (29, 30) zum Anschluss von Fingerstücken (50,51), die zur Herstellung eines Greifkontakts zu einem zu ergreifenden Gegenstand dienen, an der Backenbasis (33) ausgebildete Fingerfortsätze (34) aufweisen, die gekröpft ausgebildet sind, derart, dass Anschlussenden (39) der Fingerfortsätze in einer gemeinsamen Ebene mit einer Drehachse (23) des Antriebsmotors (27) angeordnet sind.

6. Greifvorrichtung nach einem der vorangehenden Ansprüche,
**dadurch gekennzeichnet,**
**dass** zur Ausbildung eines Vorrichtungsgestells die Achshülse (31) und ein Gestellteil (40; 54) zur Lagerung der Antriebswelle (25) oder Aufnahme des Antriebsmotors (27) über Gestellplatten (42, 43) miteinander verbunden sind, derart, dass die Backenstücke (29, 30) und das Stellgetriebe (26) sandwichartig zwischen den Gestellplatten aufgenommen sind.

7. Greifvorrichtung nach Anspruch 6,
**dadurch gekennzeichnet,**
**dass** zumindest die Gestellplatten (42, 43) des Vorrichtungsgestells aus kohlefaserverstärktem Material bestehen.

8. Greifvorrichtung nach Anspruch 6 oder 7,
**dadurch gekennzeichnet,**
**dass** das Vorrichtungsgestell ein lösbar mit dem Vorrichtungsgestell verbundenes Deckelteil (44) mit Durchführungen (46, 47) für die Fingerfortsätze (34) der Backenstücke (29, 39) aufweist, wobei das Deckelteil zusammen mit dem Gestellteil (40; 54) und den Gestellplatten (42, 43) ein Gehäuse für die Greifvorrichtung (13) ausbildet.
